(19) Europäisches Patentamt / European Patent Office / Office européen des brevets

(11) **EP 4 129 665 B1**

(12) **EUROPEAN PATENT SPECIFICATION**

(45) Date of publication and mention
of the grant of the patent:
**19.02.2025 Bulletin 2025/08**

(21) Application number: **21774428.3**

(22) Date of filing: **19.03.2021**

(51) International Patent Classification (IPC):
**B32B 27/18** (2006.01)    **C08J 5/18** (2006.01)
**C08J 7/04** (2020.01)

(52) Cooperative Patent Classification (CPC):
(C-Sets available)
**B32B 27/08; C08J 5/18; C08J 7/042; C08L 83/04;
C09D 5/1625;** C08J 2383/04; Y02E 10/72    (Cont.)

(86) International application number:
**PCT/JP2021/011536**

(87) International publication number:
**WO 2021/193474 (30.09.2021 Gazette 2021/39)**

(54) **SHEET BODY**

FOLIENKÖRPER

CORPS DE FEUILLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2020   JP 2020051586**

(43) Date of publication of application:
**08.02.2023 Bulletin 2023/06**

(73) Proprietor: **NITTO DENKO CORPORATION**
**Ibaraki-shi**
**Osaka 567-8680 (JP)**

(72) Inventors:
 • **KOSAKA, Aika**
  **Ibaraki-shi, Osaka 567-8680 (JP)**
 • **FUJITA, Hiroyuki**
  **Ibaraki-shi, Osaka 567-8680 (JP)**
 • **MARUOKA, Nobuaki**
  **Ibaraki-shi, Osaka 567-8680 (JP)**
 • **EGUCHI, Kenichi**
  **Ibaraki-shi, Osaka 567-8680 (JP)**

(74) Representative: **Gill Jennings & Every LLP**
**The Broadgate Tower**
**20 Primrose Street**
**London EC2A 2ES (GB)**

(56) References cited:
**EP-A1- 3 878 650        EP-A1- 3 878 916
EP-A1- 3 950 324        WO-A1-2020/096070
WO-A1-2020/184481      JP-A- H07 148 879
JP-U- S4 963 179        US-A1- 2010 113 662**

(52) Cooperative Patent Classification (CPC): (Cont.)

C-Sets
**C08L 83/04, C08L 83/00**

**Description**

TECHNICAL FIELD

The present invention relates to a sheet body, and more particularly, to a sheet body used for a surface covering material for preventing adhesion of snow or ice on a surface of an object such as an aircraft, a railway, an automobile, a wind power generator, a house, a traffic light, and a signboard.

BACKGROUND ART

Adhesion of ice (ice adhesion) on an object surface and adhesion of snow (snow adhesion) due to snowfall cause many damages and obstacles in various fields. For example, ice adhesion on airfoils, snow adhesion and freezing on a lower part of an engine vehicle, snow adhesion on headlights of an automobile, ice adhesion on blades of a wind power generator, snow adhesion and freezing on a lamp of a traffic light, and the like may be obstacles to the operation, driving, and safety thereof.

In addition, snow adhesion and freezing on a house roof, a signboard, or the like may cause damage to a person due to damage to these structures or falling snow.

In related art, in each industrial field, various sheets containing oil have been developed as a means for preventing such snow adhesion and ice adhesion on an object surface.

For example, Patent Literature 1 discloses an ice/snow adhesion preventing sheet including a heat insulating layer formed of a sponge material and a surface layer laminated on the heat insulating layer, in which the surface layer is formed of rubber or resin dispersed so that an oil agent can bleed.

CITATION LIST

PATENT LITERATURE

Patent Literature 1: JP-A-H7-148879

SUMMARY OF INVENTION

TECHNICAL PROBLEM

In the sheet body as disclosed in Patent Literature 1, various oil components are used. However, according to the study by the present inventors, it has been found that when an oil component having a hydrophilic group is used, the oil component flows out from the sheet body together with water at the time of rainfall or the like.

The present invention has been made in view of the above circumstances of related art, and an object of the present invention is to provide a sheet body having an excellent ice and/or snow adhesion prevention function with less outflow of an oil component even when an oil component having a hydrophilic group is used.

SOLUTION TO PROBLEM

As a result of intensive studies to solve the above problems, the present inventors have focused on a content ratio of a resin and a content ratio of an oil component in each layer in the sheet body, and have completed the present invention.

That is, the present invention relates to the following <1> to <8>.

<1> A sheet body including a first resin layer containing a first resin and a second resin layer containing a second resin, in which

the first resin layer is laminated on one surface of the second resin layer,
the first resin layer contains at least one oil component selected from the group consisting of a first oil component and a second oil component,
the second oil component contains a low temperature phase-separable oil component that has a hydrophilic group and is capable of exuding out from the first resin layer when a temperature drops to a predetermined value or less, and
the following formula (1a) and the following formula (2a) are satisfied, or the following formula (1b) and the following formula (2b) are satisfied:

$$\text{Content ratio (mass\%) of first resin in first resin layer/Content ratio (mass\%) of second resin in second resin layer} \geq 1.75 \tag{1a}$$

$$\text{Content ratio (mass\%) of first oil component in first resin layer/Content ratio (mass\%) of second oil component in first resin layer} \geq 1 \tag{2a}$$

$$\text{Content ratio (mass\%) of first resin in first resin layer/Content ratio (mass\%) of second resin in second resin layer} \geq 1.65 \tag{1b}$$

$$\text{Content ratio (mass\%) of first oil component in first resin layer/Content ratio (mass\%) of second oil component in first resin layer} \geq 4.2 \tag{2b}$$

<2> The sheet body according to <1>, in which the second resin layer contains a fourth oil component, and the fourth oil component contains a low temperature phase-separable oil component that has a hydrophilic group, is allowed to pass through the second resin layer and is capable of exuding out from the first resin layer when the temperature drops to the predetermined value or less.

<3> The sheet body according to <2>, in which a content ratio of the fourth oil component in the second resin layer is 48 mass% or less.

<4> The sheet body according to <2>, in which at least one of the hydrophilic group of the second oil component or the hydrophilic group of the fourth oil component is a hydroxy group, a carboxy group, an amino group, a sulfo group, an ether group, an ester group, or a carbinol group.

<5> The sheet body according to any one of <1> to <4>, in which a content of the first resin is 40 mass% to 99 mass% based on total mass of the first resin layer.

<6> The sheet body according to any one of <1> to <5>, in which a content of the first oil component is 1 mass% to 60 mass% based on total mass of the first resin layer.

<7> The sheet body according to any one of <1> to <6>, in which a content of the second oil component is 0.01 mass% to 20 mass% based on total mass of the first resin layer.

<8> The sheet body according to any one of <1> to <7>, in which the first resin layer has a thickness of 50 $\mu$m or more.

ADVANTAGEOUS EFFECTS OF INVENTION

A sheet body of the present invention has an excellent ice and/or snow adhesion prevention function with less outflow of an oil component even when an oil component having a hydrophilic group is used.

BRIEF DESCRIPTION OF DRAWINGS

[FIG. 1] FIG. 1 is a diagram showing an example of a layer structure of a sheet body of the present invention.
[FIG. 2] FIG. 2 is a diagram showing an example of the layer structure of the sheet body of the present invention.
[FIG. 3] FIG. 3 is a diagram showing an example of the layer structure of the sheet body of the present invention.
[FIG. 4] FIG. 4 is a diagram showing an example of the layer structure of the sheet body of the present invention.
[FIG. 5] FIG. 5 is a schematic view of a Gakushin type abrasion tester used in Examples.

DESCRIPTION OF EMBODIMENTS

Hereinafter, embodiments of the present invention will be described in more detail, but the present invention is not limited to the following embodiments at all.

1. Configuration of Sheet Body

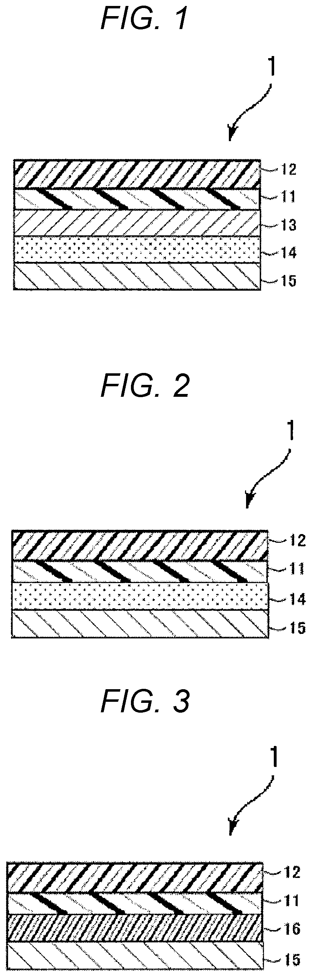

As shown in FIG. 1, a sheet body 1 of the present invention includes a second resin layer 11 and a first resin layer 12 laminated on one surface of the second resin layer 11.

The sheet body 1 of the present invention may further include, for example, a substrate 13 provided on a surface opposite to a surface on a first resin layer 12 side of the second resin layer 11, a pressure-sensitive adhesive layer 14 provided on a surface opposite to a surface on which the second resin layer 11 is provided of the substrate 13, and a separator 15 peelably attached to an outer surface of the pressure-sensitive adhesive layer 14.

When the sheet body 1 of the present invention is used, the separator 15 is peeled off to expose the pressure-sensitive adhesive layer 14, and the sheet body 1 can be adhered to various structures (not shown).

(1) First Resin Layer

The first resin layer 12 is a resin layer provided in a state of being laminated on one surface of the second resin layer 11, and contains a first resin and at least one oil component selected from the group consisting of a first oil component and a second oil component.

The thickness of the first resin layer 12 is not particularly limited, but is preferably 750 μm or less, because the oil component can easily permeate to the surface of the first resin layer 12, in other words, the oil permeability with respect to the second coating film layer 12 is obtained, and is preferably 50 μm or more from the viewpoint of strength.

<First Resin>

The first resin layer 12 preferably has higher wear resistance than that of the second resin layer 11, and thus the surface of the second resin layer 11 can be protected.

It is preferable that the first resin layer 12 does not interfere with an ice and/or snow adhesion prevention function due to the oil component accumulated in the second resin layer 11. That is, it is preferable that the first resin layer 12 has oil permeability that allows the oil component exuding from the second resin layer 11 to permeate to the surface opposite to the second resin layer 11.

The first resin is not particularly limited, and examples thereof include silicone resins, polyurethane resins, polyurethane acrylic resins, vinyl chloride resins, polyester resins, elastomers, fluorine resins, polyamide resins, polyolefin resins (polyethylene, polypropylene, etc.), acrylic resins, etc. Among them, a crosslinked silicone resin is preferable from the viewpoint of excellent bleeding effect of the oil component and excellent outdoor exposure durability.

Any appropriate silicone resin may be adopted as the silicone resin as long as the effects of the present invention are not impaired. The silicone resin may be of only one kind or of two or more kinds. Such a silicone resin may be a condensation-type silicone resin or an addition-type silicone resin. In addition, such a silicone resin may be a one-component silicone resin (e.g., a one-component room temperature vulcanizing (RTV) resin) which is dried alone, or may be a two-component silicone resin (e.g., a two-component room temperature vulcanizing (RTV) resin).

Examples of the silicone resins include one-component RTV rubbers (e.g., KE-3423, KE-347, KE-3475, KE-3495, KE-4895, KE-4896, KE-1830, KE-1884, KE-3479, KE-348, KE-4897, KE-4898, KE-1820, KE-1825, KE-1831, KE-1833, KE-1885, KE-1056, KE-1151, KE-1842, KE-1886, KE-3424G, KE-3494, KE-3490, KE-40RTV, KE-4890, KE-3497, KE-3498, KE-3493, KE-3466, KE-3467, KE-1862, KE-1867, KE-3491, KE-3492, KE-3417, KE-3418, KE-3427, KE-3428, KE-41, KE-42, KE-44, KE-45, KE-441, KE-445, KE-45S, etc.) manufactured by Shin-Etsu Chemical Co., Ltd., and two-component RTV rubbers (e.g., KE-1800T-A/B, KE-66, KE-1031-A/B, KE-200, KE-118, KE-103, KE-108, KE-119, KE-109E-A/B, KE-1051J-A/B, KE-1012-A/B, KE-106, KE-1282-A/B, KE-1283-A/B, KE-1800-A/B/C, KE-1801-A/B/C, KE-1802-A/B/C, KE-1281-A/B, KE-1204-A/B, KE-1204-AL/BL, KE-1280-A/B, KE-513-A/B, KE-521-A/B, KE-1285-A/B, KE-1861-A/B, KE-12, KE-14, KE-17, KE-113, KE-24, KE- 26, KE-1414, KE-1415, KE-1416, KE-1417, KE-1300T, KE-1310ST, KE-1314-2, KE-1316, KE-1600, KE-117603-A/B, KE-1606, KE-1222-A/B, KE-1241, etc.) manufactured by Shin-Etsu Chemical Co., Ltd., silicone sealants (e.g., KE-42AS, KE-420, KE-450, etc.) manufactured by Shin-Etsu Chemical Co., Ltd., rubber compounds (e.g., KE-655-U, KE-675-U, KE-931-U, KE-941-U, KE-951-U, KE-961-U, KE-971-U, KE-981-U, KE- 961T-U, KE-971T-U, KE-871C-U, KE-9410-U, KE-9510-U, KE-9610-U, KE-9710-U, KE-742-U, KE-752-U, KE-762-U, KE-772-U, KE-782-U, KE-850-U, KE-870-U, KE-880-U, KE-890-U, KE-9590-U, KE-5590-U, KE-552-U, KE-582-U, KE-552B-U, KE-555-U, KE-575-U, KE-541-U, KE-551-U, KE- 561-U, KE-571-U, KE-581-U, KE-520-U, KE-530B-2-U, KE-540B-2-U, KE-1551-U, KE-1571-U, KE-152-U, KE-174-U, KE-3601SB-U, KE-3711-U, KE-3801M-U, KE-5612G-U, KE-5620BL-U, KE-5620W-U, KE-5634-U, KE-7511-U, KE-7611-U, KE-765-U, KE-785-U, KE-7008-U, KE-7005-U, KE-503-U, KE-5042- U, KE-505-U, KE-6801-U, KE-136Y-U, etc.) manufactured by Shin-Etsu Chemical Co., Ltd.; a liquid silicone rubber injection molding system (LIMS) (e.g., KEG-2000-40A/B, KEG-2000-50A/B, KEG-2000-60A/B, KEG-2000-70A/B, KEG-2001-40A/B, KEG-2001-50A/B, KE-1950-10A/B, KE-1950-20A/B, KE-1950-30A/B, KE-1950-35A/B, KE-1950-40A/B, KE-1950-50A/B, KE-1950-60A/B, KE-1950-70A/B, KE-193185A/B, KE-1987A/B, KE-1988A/B, KE-2019-40A/B, KE-2019-50A/B, KE-2019-60A/B, KE-2017-30A/B, KE-2017-40A/B, KE-2017-50A/B, KE-2090-40A/B, KE-2090-50A/B, KE-2090-60A/B, KE-2090-70A/B, KE-2096-40A/B, KE-2096-50A/B, KE-2096-60A/B, etc.) manufactured by Shin-Etsu Chemical Co., Ltd.; LR7665 series manufactured by Wacker Asahikasei Silicone Co., Ltd.; LR3033 series manufactured by Wacker Asahikasei Silicone Co., Ltd.; TSE3032 series manufactured by Momentive Performance Co., Ltd.; Silguard 184 manufactured by Dow Corning Toray Co., Ltd.; etc.

The first resin may be the same as the second resin described later. However, in order to improve the wear resistance, a ratio of the first resin included in the first resin layer 12 is preferably set to a value significantly larger than a ratio of the second resin included in the second resin layer 11.

<Oil Component>

The first resin layer 12 contains at least one oil component selected from the group consisting of a first oil component and a second oil component.

Examples of the first oil component include silicone oil, fluorine oil, hydrocarbon-based oil, polyether-based oil, ester-based oil, phosphorus compound-based oil, mineral-based oil, etc.

Examples of the silicone oil include silicone oils (e.g., KF96L series, KF96 series, KF69 series, KF99 series, KF50 series, KF54 series, KF410 series, KF412 series, KF414 series, FL series, KF-6000, KF-6001, KF-6002, KF-6003) manufactured by Shin-Etsu Chemical Co., Ltd.; silicone oils (e.g., Element 14* PDMS series, TSF404 series, TSF410 series, TSF4300 series, TSF431 series, TSF433 series, TSF437 series, TSF4420 series, TSF4421 series) manufactured by Momentive Performance Co., Ltd., silicone oils (e.g., BY16-846 series, SF8416 series, SF8427 series, SF-8428 series, SH200 series, SH203 series, SH230 series, SF8419 series, FS1265 series, SH510 series, SH550 series, SH710 series, FZ-2110 series, FZ-2203 series, BY16-201) manufactured by Dow Corning Toray Co., Ltd., and silicone oils (e.g., WACKER (registered trademark) SILICONE FLUID AK series, WACKER (registered trademark) SILICONE FLUID AP series, WACKER (registered trademark) SILICONE FLUID AR series, WACKER (registered trademark) SILICONE FLUID AS series, WACKER (registered trademark) TN series, WACKER (registered trademark) Registered trademark) L series, WACKER (registered trademark) AF series) manufactured by Wacker Asahikasei Silicone Co., Ltd., etc.

The second oil component contains, for example, a low temperature phase-separable oil component that is phase-separated from the first oil component and can exude out from the first resin layer when a temperature drops to a predetermined value or less, and has a hydrophilic group.

The term "a predetermined value or less" means, for example, a freezing point (0°C) or less.

Examples of the hydrophilic group include a hydroxy group, a carboxy group, an amino group, a sulfo group, an ether group (e.g., a polyether group such as a polyoxyethylene group), an ester group, a carbinol group, etc.

Examples of the second oil component include silicone oil, fluorine oil, hydrocarbon-based oil, polyether-based oil, ester-based oil, phosphorus compound-based oil, mineral-based oil, etc.

Examples of the silicone oil include silicone oils (e.g., BY16-201) manufactured by Dow Corning Toray Co., Ltd., silicone oils (e.g., KF-6000, KF-6001, KF-6002, KF-6003, KF-6011, KF-6011P, KF-6043, PAM-E, KF-8010, X-22-161A, X-22-161B, KF- 8012, KF-8008, X-22-1660B-3, X-22-9409, X-22-4952, X-22-4272, KF-6123, X-22-162C, X-21-5841, KF-9701, KF-864, KF-865, KF-868, KF-859, KF-393, KF-860, KF-880, KF-8004, KF-8002, KF-8005, KF-867, KF-8021, KF-869, KF-861, X-22-3939A, X-22-4039, X-22-4015, X-22-3701E, X-22-173BX, X-22-173DX, X-22-176F, X-22-176DX, X-22-176GX-A, X-22-3710, etc.) manufactured by Shin-Etsu Chemical Co., Ltd., etc.

In addition, an oil having a hydrophilic group at a terminal or a side chain may be used.

The content of the first resin may be set to preferably 40 mass% or more, more preferably 50 mass% or more, and still more preferably 60 mass% or more, based on total mass of the finally formed first resin layer. The content of the first resin may be set to preferably 99 mass% or less, more preferably 90 mass% or less, and still more preferably 80 mass% or less, based on total mass of the finally formed first resin layer.

The content of the first oil component may be set to preferably 1 mass% or more, more preferably 5 mass% or more, and still more preferably 10 mass% or more, based on total mass of the finally formed first resin layer. The content of the first oil component may be set to preferably 60 mass% or less, more preferably 50 mass% or less, and still more preferably 30 mass% or less, based on total mass of the finally formed first resin layer.

The content of the second oil component may be set to preferably 0.01 mass% or more, more preferably 1 mass% or more, and still more preferably 5 mass% or more, based on total mass of the finally formed first resin layer. The content of the second oil component may be set to preferably 20 mass% or less, more preferably 15 mass% or less, and still more preferably 10 mass% or less, based on total mass of the finally formed first resin layer.

(2) Second Resin Layer

The second resin layer 11 contains a second resin.

The second resin layer 11 preferably contains a third oil component and a fourth oil component. The second resin layer 11 is a resin layer in which a part of the contained oil, for example, the fourth oil component can exude (bleed) out from the second resin (more specifically, exude out from the second resin layer to the surface of the first resin layer via the first resin layer), and the exuded oil component can prevent ice and/or snow adhesion.

The thickness of the second resin layer 11 is not particularly limited, but is preferably 10000 $\mu$m or less, more preferably 5000 $\mu$m or less, still more preferably 2500 $\mu$m or less, and particularly preferably 2000 $\mu$m or less in order to appropriately exude the oil. From the viewpoint of strength, the thickness is preferably 10 $\mu$m or more, more preferably 50

μm or more, still more preferably 100 μm or more, and particularly preferably 200 μm or more.

<Second Resin>

An example of the second resin is the same as that of the first resin described above.

<Oil Component>

The second resin layer 11 preferably contains the third oil component and the fourth oil component.
Examples of the third oil component may be the same as those of the first oil component described above.
Examples of the fourth oil component may be the same as those of the second oil component described above.
The fourth oil component preferably contains a low temperature phase-separable oil component that is phase-separated from, for example, the third oil component, is allowed to pass through the second resin layer, and can exude out from the first resin layer when the temperature drops to a predetermined value or less, and preferably has the hydrophilic group described above.
The term "a predetermined value or less" means, for example, a freezing point (0°C) or less.
The content of the second resin is preferably 30 mass% or more, more preferably 35 mass% or more, and still more preferably 40 mass% or more, based on total mass of the finally formed second resin layer. The upper limit of the content of the second resin is not particularly limited and is appropriately set in relation to the oil component. For example, the content of the second resin may be 70 mass% or less, based on total mass of the finally formed second resin layer.
The content of the third oil component may be set to preferably 10 mass% or more, more preferably 15 mass% or more, and still more preferably 20 mass% or more, based on total mass of the finally formed second resin layer. The upper limit of the content of the third oil component is not particularly limited, but the content may be set to preferably 65 mass% or less, more preferably 50 mass% or less, still more preferably 40 mass% or less, particularly preferably 30 mass% or less, and most preferably 20 mass% or less, based on total mass of the finally formed second resin layer.
The content of the fourth oil component is preferably 5 mass% or more, more preferably 10 mass% or more, still more preferably 15 mass% or more, based on total mass of the finally formed second resin layer. The upper limit of the content of the fourth oil component is not particularly limited, but the content may be set to preferably 48 mass% or less, more preferably 45 mass% or less, still more preferably 40 mass% or less, particularly preferably 35 mass% or less, and most preferably 30 mass% or less, based on total mass of the finally formed second resin layer.

(3) Characteristics of Resin and Oil Component

As the first oil component, the second oil component, and the first resin, for example, a combination satisfying the following properties 1) and 2) is preferably selected.

1) The first oil component and the second oil component are not phase-separated and are compatible with each other at a temperature at which bleeding of the second oil component is not required, for example, at a normal temperature of about 20°C to 80°C, which is significantly higher than a predetermined value such as a freezing point. On the other hand, the first oil component and the second oil component are phase-separated under an environment of a temperature at which bleeding of the second oil component is required, for example, a temperature of a predetermined value or less such as a freezing point or less.
2) The first oil component has affinity for the first resin at both a temperature at which bleeding of the second oil component is not required and a temperature at which bleeding of the second oil component is required. On the other hand, in the presence of the first oil component, the behavior of the second oil component is changed depending on whether the temperature is a temperature at which bleeding of the second oil component is not required or a temperature at which bleeding of the second oil component is required.

More specifically, when the first oil component is not present, the second oil component does not have affinity for the first resin at both a temperature at which bleeding of the second oil component is not required and a temperature at which bleeding of the second oil component is required. In other words, the second oil component exudes out from the first resin.
On the other hand, in the presence of the first oil component, the second oil component is compatible with the first oil component at a temperature at which bleeding of the second oil component is not required, and thus has affinity for the first resin. In other words, the second oil component does not exude out from the first resin.
On the other hand, the second oil component is phase-separated from the first oil component at a temperature at which bleeding of the second oil component is required, and does not have affinity for the first resin. In other words, the second oil component functions as a low-temperature phase-separable oil component that is phase-separated from the first oil component.

3) The third oil component and the fourth oil component are not phase-separated and are compatible with each other at a temperature at which bleeding of the fourth oil component is not required, for example, at a normal temperature of about 20°C to 80°C, which is significantly higher than a predetermined value such as a freezing point. On the other hand, the third oil component and the fourth oil component are phase-separated under an environment of a temperature at which bleeding of the fourth oil component is required, for example, a temperature of a predetermined value or less such as a freezing point or less.

4) The third oil component has affinity for the second resin at both a temperature at which bleeding of the fourth oil component is not required and a temperature at which bleeding of the fourth oil component is required. On the other hand, in the presence of the third oil component, the behavior of the fourth oil component is changed depending on whether the temperature is a temperature at which bleeding of the fourth oil component is not required or a temperature at which bleeding of the fourth oil component is required.

More specifically, when the third oil component is not present, the fourth oil component does not have affinity for the second resin at both a temperature at which bleeding of the fourth oil component is not required and a temperature at which bleeding of the fourth oil component is required. In other words, the fourth oil component exudes out from the second resin.

On the other hand, in the presence of the third oil component, the fourth oil component is compatible with the third oil component at a temperature at which bleeding of the fourth oil component is not required, and thus has affinity for the second resin. In other words, the fourth oil component does not exude out from the second resin.

On the other hand, the fourth oil component is phase-separated from the third oil component at a temperature at which bleeding of the fourth oil component is required, and does not have affinity for the second resin. In other words, the fourth oil component functions as a low-temperature phase-separable oil component that is phase-separated from the third oil component.

In addition, it is empirically known that a value (SP value) of a solubility parameter serves as an indicator for determining the ease of mixing of a solvent and a solute. The relationship between the first oil component, the second oil component, and the first resin, and the relationship between the third oil component, the fourth oil component, and the second resin described above can also be described based on the relationship between values of solubility parameters thereof. In the present specification, a Hansen solubility parameter is used as the solubility parameter. This value can be determined by performing Fourier transform nuclear magnetic resonance spectroscopy analysis on the first oil component, the second oil component, the first resin, the third oil component, the fourth oil component, and the second resin, examining the type of molecular unit constituting the molecular structure of each component and the molar ratio thereof, and calculating a weighted average of Hansen solubility parameters of each molecular unit type in terms of the molar ratio.

The Hansen solubility parameter of each molecular unit type can be determined by a molecular group contribution method using software "HSPiP, Hansen SoLubiLity Parameters in Practice ver4" available from a link (https://hansen-soLubiLity.com/). Specifically, HSP values ($\delta_d$, $\delta_p$, $\delta_h$) of the respective units can be calculated by inputting the respective constituent units in a target substance by a SMILES notation.

In order to satisfy the relationships 1) and 2) above, at least a difference between the value of the solubility parameter of the first resin and the value of the solubility parameter of the first oil component is preferably set to be smaller than a difference between the value of the solubility parameter of the first resin and the value of the solubility parameter of the second oil component. The difference in solubility parameter between the first oil component and the first resin is preferably set to 0.6 $(J/cm^3)^{1/2}$ or less.

In order to satisfy the relationships 3) and 4) above, at least a difference between the value of the solubility parameter of the second resin and the value of the solubility parameter of the third oil component is preferably set to be smaller than a difference between the value of the solubility parameter of the second resin and the value of the solubility parameter of the fourth oil component. The difference in solubility parameter between the third oil component and the second resin is preferably set to 0.6 $(J/cm^3)^{1/2}$ or less.

For example, when the relationships 1) and 2) above are satisfied, the second oil component is compatible with the first oil component at a temperature at which bleeding of the second oil component is not required, and therefore, the second oil component does not bleed out from the surface of the first resin layer 12 or the second resin layer 11. On the other hand, when the temperature is changed to a temperature at which bleeding of the second oil component is required, the second oil component is phase-separated from the first oil component, exudes out from the surface of the first resin layer 12 or the side of the first resin layer 12 of the second resin layer 11, and can function as a bleedable low-temperature phase-separable oil component.

For example, when the relationships of 3) and 4) above are satisfied, the fourth oil component is compatible with the third oil component at a temperature at which bleeding of the fourth oil component is not required, and therefore, the fourth oil component does not bleed out from the surface of the second resin layer 11. On the other hand, when the temperature is changed to a temperature at which bleeding of the fourth oil component is required, the fourth oil component is phase-separated from the third oil component, exudes out from the surface of the side of the first resin layer 12 of the second resin layer 11, and can function as a bleedable low-temperature phase-separable oil component.

As is clear from the above description, the first oil component and the second oil component do not need to be distinguished from each other in terms of substances, and may be distinguished from each other in terms of functions and actions described above. Therefore, both the first oil component and the second oil component do not need to be constituted by one oil component, and each of the first oil component and the second oil component may contain a plurality of oil components as long as the above-described conditions are satisfied.

As is clear from the above description, the third oil component and the fourth oil component do not need to be distinguished from each other in terms of substances, and may be distinguished from each other in terms of functions and actions described above. Therefore, both the third oil component and the fourth oil component do not need to be constituted by one oil component, and each of the third oil component and the fourth oil component may contain a plurality of oil components as long as the above-described conditions are satisfied.

In one embodiment of the sheet body of the present invention, the following formulae (1a) and (2a) are satisfied.

$$\text{Content ratio (mass\%) of first resin in first resin layer/Content ratio (mass\%) of second resin in second resin layer} \geq 1.75 \tag{1a}$$

$$\text{Content ratio (mass\%) of first oil component in first resin layer/Content ratio (mass\%) of second oil component in first resin layer} \geq 1 \tag{2a}$$

Hereinafter, "content ratio (mass%) of first resin in first resin layer/content ratio (mass%) of second resin in second resin layer" in the embodiment may be referred to as a "resin ratio 1", and "content ratio (mass%) of first oil component in first resin layer/content ratio (mass%) of second oil component in first resin layer" may be referred to as an "oil ratio 1".

When the formula (1a) and the formula (2a) are satisfied, the content ratio of the first resin in the first resin layer becomes higher than the content ratio of the second resin in the second resin layer, and a sheet body in which the amount of the second oil in the first resin layer is small is obtained. As a result, it is presumed that the outflow of the oil component in the second resin layer is small even when an oil component having a hydrophilic group is used, and a sheet body having an excellent ice and/or snow adhesion prevention function can be obtained.

The resin ratio 1 is preferably 1.80 or more, more preferably 1.85 or more, and still more preferably 1.95 or more. Since the higher the resin ratio 1 is, the better it is, the upper limit thereof is not particularly limited, but the resin ratio 1 may be set to, for example, 10.0 or less, preferably 8.0 or less, more preferably 5.0 or less, and particularly preferably 4.0 or less.

The oil ratio 1 is preferably 1.05 or more, and more preferably 1.1 or more.

In another embodiment of the sheet body of the present invention, the following formulae (1b) and (2b) are satisfied.

$$\text{Content ratio (mass\%) of first resin in first resin layer/Content ratio (mass\%) of second resin in second resin layer} \geq 1.65 \tag{1b}$$

$$\text{Content ratio (mass\%) of first oil component in first resin layer/Content ratio (mass\%) of second oil component in first resin layer} \geq 4.2 \tag{2b}$$

Hereinafter, "content ratio (mass%) of first resin in first resin layer/content ratio (mass%) of second resin in second resin layer" in the embodiment may be referred to as a "resin ratio 2", and "content ratio (mass%) of first oil component in first resin layer/content ratio (mass%) of second oil component in first resin layer" may be referred to as an "oil ratio 2".

When the formula (1b) and the formula (2b) are satisfied, a sheet body is obtained in which the content ratio of the first resin in the first resin layer is high and the content ratio of the second oil component in the first resin layer is low. As a result, it is presumed that the outflow of the oil component in the second resin layer is small even when an oil component having a hydrophilic group is used, and a sheet body having an excellent ice and/or snow adhesion prevention function can be obtained.

The resin ratio 2 is preferably 1.67 or more, and more preferably 1.70 or more. The upper limit of the resin ratio 2 can be set to, for example, less than 1.75.

The oil ratio 2 is preferably 5.0 or more, more preferably 5.5 or more, and still more preferably 6.0 or more.

The viscosity of the first oil component is preferably 0.002 to 5.0 (Pa•s), more preferably 0.005 to 3.0 (Pa•s), and still more preferably 0.010 to 1.0 (Pa•s).

The viscosity of the second oil component is preferably 0.004 to 0.300 (Pa•s), more preferably 0.010 to 0.200 (Pa•s), and still more preferably 0.010 to 0.100 (Pa•s).

The viscosity of the third oil component is preferably 0.002 to 5.0 (Pa•s), more preferably 0.005 to 3.0 (Pa•s), and still more preferably 0.010 to 1.0 (Pa•s).

The viscosity of the fourth oil component is preferably 0.004 to 0.300 (Pa•s), more preferably 0.010 to 0.200 (Pa•s), and still more preferably 0.010 to 0.100 (Pa•s).

The viscosity of the oil component can be specifically measured by a method described in Examples.

(4) Substrate

The substrate 13 can be used to support the second resin layer 11 and the like to express the strength of the sheet body 1 and to facilitate handling of the sheet body 1.

The substrate 13 is not particularly limited, and for example, polyurethane resins, polyurethane acrylic resins, rubber-based resins, vinyl chloride resins, polyester resins, silicone resins, elastomers, fluorine resins, polyamide resins, polyolefin resins (polyethylene, polypropylene, etc.), metal plates or metal foils (aluminum, copper, silver, iron, nickel, tin, stainless, etc.), etc. can be used.

In order to prevent the oil component from flowing out from the second resin layer 11, the substrate 13 is preferably formed as an oil-impermeable resin layer. The oil-impermeable substrate is not particularly limited, and for example, polyurethane resins, polyurethane acrylic resins, rubber-based resins, vinyl chloride resins, polyester resins, silicone resins, elastomers, fluorine resins, polyamide resins, polyolefin resins (polyethylene, polypropylene, etc.), etc. can be used.

(5) Pressure-sensitive Adhesive Layer

The pressure-sensitive adhesive layer 14 can be used to cause the second resin layer 11 and the like to adhere to various adherends.

The pressure-sensitive adhesive layer 14 is not particularly limited, and for example, an acrylic resin-based pressure-sensitive adhesive, an epoxy resin-based pressure-sensitive adhesive, an amino resin-based pressure-sensitive adhesive, a vinyl resin-based (such as a vinyl acetate-based polymer) pressure-sensitive adhesive, a curable acrylic resin-based pressure-sensitive adhesive, and a silicone resin-based pressure-sensitive adhesive, etc. can be used.

In order to prevent the oil component from flowing out from the second resin layer 11, an oil-impermeable resin layer may be formed by the pressure-sensitive adhesive layer 14 instead of the oil-impermeable substrate 13 or together with the oil-impermeable substrate 13.

The oil-impermeable pressure-sensitive adhesive layer is not particularly limited, and for example, an acrylic resin-based pressure-sensitive adhesive, an epoxy resin-based pressure-sensitive adhesive, an amino resin-based pressure-sensitive adhesive, a vinyl resin-based (such as a vinyl acetate-based polymer) pressure-sensitive adhesive, a curable acrylic resin-based pressure-sensitive adhesive, and a silicone resin-based pressure-sensitive adhesive, etc. can be used.

When the oil-impermeable resin layer is formed of a pressure-sensitive adhesive layer, the substrate 13 does not necessarily have to be oil-impermeable. Therefore, when there is no problem in strength or the like, the substrate 13 can be omitted as shown in FIG. 2. In this case, the pressure-sensitive adhesive layer 14 is provided on the other surface opposite to the one surface of the second resin layer 11.

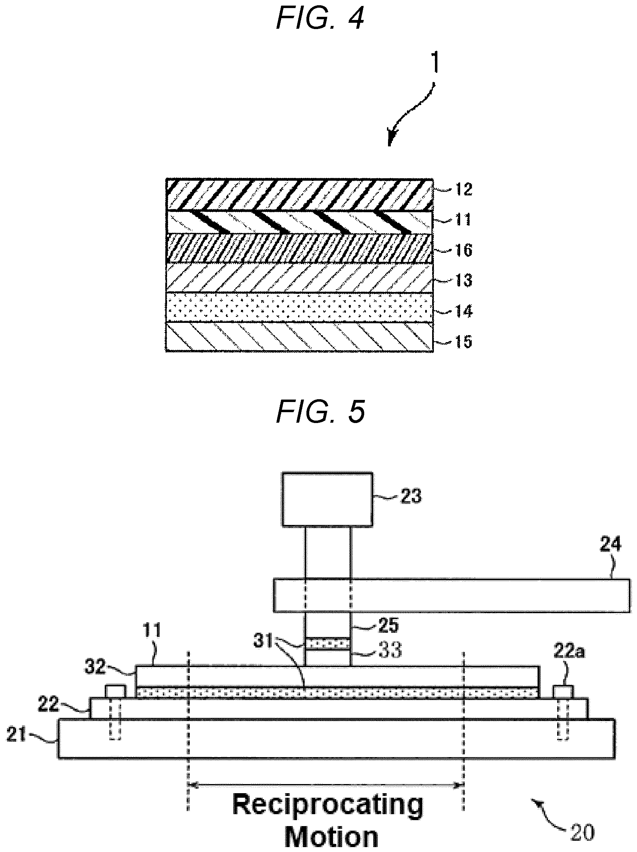

Instead of the substrate 13 and the pressure-sensitive adhesive layer 14 as shown in FIG. 3, or in addition to the substrate 13 and the pressure-sensitive adhesive layer 14 as shown in FIG. 4, an oil-impermeable resin layer 16 may be further provided between the second resin layer 11 and the substrate 13. Although not particularly shown, in FIG. 4, the oil-impermeable resin layer 16 may be disposed between the substrate 13 and the pressure-sensitive adhesive layer 14. A material of the oil-impermeable resin layer 16 is not particularly limited, and the same material as that of the oil-impermeable substrate 13 can be used.

Since the pressure-sensitive adhesive layer 14 is provided to cause the second resin layer 11 and the like to adhere to various adherends, for example, a pressure-sensitive adhesive tape or the like may be used instead of the pressure-sensitive adhesive layer 14.

(6) Separator

The separator 15 can be appropriately selected according to the material and the like of the pressure-sensitive adhesive layer 14. The separator 15 is not particularly limited, and for example, a film formed of polyurethane resins, polyurethane acrylic resins, rubber-based resins, vinyl chloride resins, polyester resins, silicone resins, elastomers, fluorine resins, polyamide resins, polyolefin resins (polyethylene, polypropylene, etc.), etc. can be used.

The surface of the separator may be subjected to a release treatment with an appropriate release treatment agent such as a silicone-based release treatment agent, a long-chain alkyl-based release treatment agent, an olefin-based release treatment agent, a fluorine-based release treatment agent, a fatty acid amide-based release treatment agent, molybdenum sulfide, or silica powder, in order to improve peelability.

(7) Preparation of Sheet Body

A method for producing the sheet body of the present invention is not limited. For example, first, the second resin layer 11 is produced using the resin component and the oil component, and then the first resin layer 12 is produced on the second resin layer 11 using the resin component and the oil component.

Next, for example, the substrate 13, the pressure-sensitive adhesive layer 14, and the separator 15 are provided on the laminate of the second resin layer 11 and the first resin layer 12 by using a known process of related art. The substrate 13 is bonded to the surface opposite to the side of the first resin layer 12 of the second resin layer 11 by, for example, an adhesive. The pressure-sensitive adhesive layer 14 is provided on the surface of the substrate 13 on the side opposite to the second resin layer 11 and the like. Thereafter, the separator 15 is attached to the outer surface of the pressure-sensitive adhesive layer 14 in a peelable state.

(8) Characteristics of Sheet Body

(Thickness Ratio)

In the sheet body of the present invention, a ratio of the thickness (thickness ratio) of the first resin layer to the thickness of the second resin layer, which is determined based on the following formula, is preferably 0.75 or less, and more preferably 0.5 or less so that the oil component of the second resin layer sufficiently bleeds out from the first resin layer. The thickness ratio is preferably 0.05 or more, and more preferably 0.1 or more, from the viewpoint of strength. As a result, from the viewpoint of the amount of bleed oil and the strength, the thickness ratio is preferably 0.05 to 0.75, and more preferably 0.1 to 0.5.

$$\text{Thickness ratio} = \text{Thickness of first resin layer/Thickness of second resin layer}$$

(Surface Oil Amount)

The amount of oil bleeding to the surface of the first resin layer (surface oil amount) at 20°C is preferably less than 40 $\mu$g/cm$^2$ in order to prevent wasteful bleeding.

The amount of oil bleeding to the surface of the first resin layer (surface oil amount) at 0°C and -20°C is preferably 40 $\mu$g/cm$^2$ or more, and more preferably 300 $\mu$g/cm$^2$ or more, in order to prevent ice and snow adhesion.

However, the sheet body can be used even when the surface oil amount is out of the above range.

The surface oil amount can be specifically measured by a method described in Examples.

(Wear Resistance)

The reduction rate of the first resin layer when a water-resistant abrasive is reciprocated 100 times with respect to the first resin layer under a pressing force of 125 g/cm$^2$ at a speed of 100 mm/s is preferably less than 80 mass%, more preferably less than 50 mass%, and still more preferably less than 20 mass% so as to withstand outdoor use.

However, the sheet body can be used even when the reduction rate is out of the above range.

The reduction rate of the first resin layer can be specifically measured by a method described in Examples.

(Ice Adhesion Strength)

In an environment of -20°C, a force (ice adhesion strength) required for moving ice blocks adhering to the first resin layer is preferably less than 1.0 N/cm$^2$. The smaller the ice adhesion strength is, the better it is.

However, the sheet body can be used even when the ice adhesion strength is out of the above range.

The value of the ice adhesion strength can be specifically measured by a method described in Examples.

[Examples]

Hereinafter, the present invention is described in more detail with reference to Examples and the like, but the present invention is not limited to the following Examples.

[Example 1]

<Preparation of Sheet Body>

(Preparation of Second Resin Layer)

Resin component: KE1935A/B (manufactured by Shin-Etsu Chemical Co., Ltd.), third oil component: dimethylsiloxane oil (manufactured by Shin-Etsu Chemical Co., Ltd., product number: KF-96 50cs), fourth oil component: carbinol-modified oil (manufactured by Dow Corning Toray Co., Ltd., BY16-201, containing a hydroxy group), and an additive were mixed at a ratio of 39.6:47.6:11.8:1 (mass ratio).
As the additive, one obtained by mixing methyl hydrogen silicone oil (manufactured by Shin-Etsu Chemical Co., Ltd., product number: KF-99), a reaction retarder (manufactured by Shin-Etsu Chemical Co., Ltd., product number: Seigyozai No. 6-10), and a platinum catalyst (manufactured by Shin-Etsu Chemical Co., Ltd., product number: CAT-PL-50T) at a ratio of 0.1:0.8:0.1 (mass ratio) was used.
The obtained mixture was applied onto a PET sheet body (Lumirror S10 # 75, manufactured by Toray Industries, Inc.) using an applicator, and cured by heating for 3 minutes in an environment of 150°C to form a second resin layer having a thickness of 250 μm.

(Preparation of First Resin Layer)

Resin component: KE1935A/B (manufactured by Shin-Etsu Chemical Co., Ltd.), first oil component: dimethylsiloxane oil (manufactured by Shin-Etsu Chemical Co., Ltd., product number: KF-9650cs), second oil component: carbinol-modified oil (manufactured by Dow Corning Toray Co., Ltd., BY16-201, containing a hydroxy group), and an additive were mixed at a ratio of 66:33:0:1 (mass ratio).
As the additive, the same additive as that used in the second resin layer was used.
The obtained mixture was applied onto the second resin layer using the applicator, and cured by heating for 3 minutes in an environment of 150°C to form a first resin layer having a thickness of 50 μm, thereby obtaining a sheet body.

<Evaluation>

The oil to be used and the obtained sheet body were evaluated as follows. The results are shown in Table 6.

(Viscosity of Oil Component)

The viscosity with respect to a shear rate was measured using a rotary viscometer (HAAKE, manufactured by Thermo Fisher Scientific Co., Ltd.). The measurement was performed by increasing the shear rate from 0.1 to 1000 [1/s] in 30 seconds and then decreasing the shear rate from 1000 to 0.1 [1/s] in 30 seconds.
The value of the viscosity at a shear rate of 1.0 [1/s] when the shear rate was increased was used.
A parallel plate (diameter: 35 mm) was used as a measuring jig.
A gap between the plates was 0.024 mm.
The measurement temperature was set to 20°C by a temperature control unit.

(Thickness and Thickness Ratio)

The thickness of each of the first resin layer and the second resin layer was measured using a film thickness meter MFC-101 (manufactured by Nikon Corporation). The thickness ratio was determined based on the following formula by using the thickness obtained by the method.

$$\text{Thickness ratio} = \text{thickness of first resin layer/thickness of second resin layer}$$

The thickness ratio was 0.2 in all Examples.

(Phase Separability and Compatibility, etc.)

a) Phase separability and compatibility according to temperature change between the "third oil component" and the "fourth oil component", b) affinity according to temperature change between the "third oil component" and the "resin component of the second resin layer", and c) affinity according to temperature change between the "fourth oil component" and the "resin component of the second resin layer" were evaluated.

However, direct analysis targets were a mixture of the "third oil component" and the "fourth oil component" extracted from the second resin layer and the oil component exuding out from the surface of the second resin layer. The second resin layer was obtained by scraping off the first resin layer from the sheet body.

In order to evaluate the above (a), first, the second resin layer was immersed in toluene (manufactured by FUJIFILM Wako Pure Chemical Industries, Ltd.) at 20°C for 24 hours to extract the third oil component and the fourth oil component as a mixture. The third oil component and the fourth oil component in the mixture were separated by liquid layer chromatography.

With respect to the extracted mixture of the third oil component and the fourth oil component, "transmittance at 20°C and 500 nm" and "transmittance at 3°C and 500 nm" were measured, separately. It was determined whether "the third oil component and the fourth oil component were phase-separated (not compatibilized)" or "the third oil component and the fourth oil component were compatibilized (not phase-separated)" based on the ratio of those differences in "transmittance at 20°C and 500 nm".

The evaluation criteria are as follows.

A: The difference in transmittance was 10% or more (phase-separated (not compatibilized) according to temperature change).
B: The difference in transmittance was less than 10% (compatibilized (not phase-separated) according to temperature change).

The transmittance was measured using an ultraviolet-visible spectrophotometer (V-750, manufactured by JASCO Corporation) with a measurement wavelength set at 500 nm, a scan speed at 1000 nm/min, and a stirring speed at 400 rpm, after allowing the sample to stand for 10 minutes at 20°C or 3°C, separately. The reference was air.

In the above (b), first, an oil-containing resin layer containing only the third oil component was prepared on the second resin layer from which each oil component was extracted. The oil-containing resin layer was evaluated based on whether the third oil component exudes out from the surface of the oil-containing resin layer when the oil-containing resin layer was placed in an environment of 20°C and in an environment of 3°C, separately.

The evaluation criteria are as follows.

A: The third oil component exuded out at both 20°C and 3 °C.
B: The third oil component did not exude out at both 20°C and 3°C.

The above c) was evaluated in the same manner as in the above b) except that the fourth oil component was used instead of the third oil component.

(Surface Oil Amount)

The amount of oil bleeding on the surface of the first resin layer at each of 20°C, 0°C (freezing point), and -20°C was measured. In the measurement, it was confirmed that the bleed oil was mainly the second oil component.

The surface oil amount was measured by the following method.

The sheet was cut into a size of 10 cm × 2 cm in the vicinity of the center of the sheet body and allowed to stand at temperatures of 20°C, 0°C, and -20°C for 16 hours. The oil bleeding on the surface of the first resin layer under each temperature environment was collected by a cell scraper (CSS-2510, manufactured by Kenis Co., Ltd.), and the oil was absorbed using an oil-absorbing paper until no change in the mass (oil absorption amount) of the oil-absorbing paper was observed. The oil collection by the cell scraper and the absorption by the oil-absorbing paper were repeated seven times per minute. The difference in mass of the oil-absorbing paper before and after the oil absorption was defined as the surface oil amount. The test was performed three times, and the average value thereof was calculated.

The evaluation criteria are as follows.

A: The surface oil amount was 40 $\mu$g/cm$^2$ or more and less than 300 $\mu$g/cm$^2$.
B: The surface oil amount was less than 40 $\mu$g/cm$^2$.

(Wear Resistance)

The wear resistance of the first resin layer was evaluated.

A Gakushin type abrasion tester (model number: RT-300S, manufactured by Daiei Scientific Seiki Seisakusho Co., Ltd.) was used as a measuring device. FIG. 5 is a schematic view of the tester. A Gakushin type abrasion tester 20 includes a test table 21, a support plate 22 fixed to the test table 21 by a screw 22a or the like, and a friction element 25 (size: 2 cm × 2 cm) disposed above the support plate 22 and below a cantilevered load arm 24 to which a load is applied by a weight 23.

By using the Gakushin type abrasion tester 20, with respect to the first resin layer of a test piece 32 attached to the support plate 22 via a pressure-sensitive adhesive 31 (manufactured by Nitto Denko Corporation, No. 5000NS), in particular, a region of 20 mm × 120 mm of the test piece 32, the reduction rate of the first resin layer was determined when a water-resistant abrasive 33 having the mesh roughness of #120 attached to the lower side of the friction element 25 via the pressure-sensitive adhesive 31 was reciprocated 100 times at a pressing force of 125 g/cm$^2$ adjusted by the weight 23 and the cantilevered load arm 24 and at a speed of 100 mm/s. The room temperature was set to 20°C.

The evaluation criteria are as follows.

A: The reduction rate was less than 10 mass%.
B: The reduction rate was 10 mass% or more and less than 80 mass%.
C: The reduction rate was 80 mass% or more.

(Ice Adhesion Strength)

A force required for moving ice blocks adhering on the first resin layer in an environment of -20°C was measured. For convenience, the strength of this force is defined as an "ice adhesion strength" in the present specification.

The ice adhesion strength was measured by the following method.

First, a cylindrical ice block was produced. The ice block was produced by placing a stainless ring (inner diameter: 25 mm) on the bottom surface of a styrol square case 16 type (manufactured by AS ONE Corporation), pouring 6 g of pure water into the stainless ring, freezing the pure water at -20°C for 16 hours or more, and removing the stainless ring after freezing.

Next, the sheet body left to stand in an environment of -20°C for 16 hours was attached to a stainless plate placed in parallel to the floor surface so that the first resin layer was on the surface. The cylindrical ice block having an adhesion area of 4.9 cm$^2$ was adhered thereto.

After 3 hours from the setting of the environmental temperature to -20°C and the adhesion of the ice block, the ice block was pressed from a direction parallel to the floor surface in an environment of -20°C with a load cell (DPU-50 manufactured by Imada Co., Ltd., attachment jig A type A-4) at a speed of 0.1 mm/sec, and a load applied for 40 seconds was measured with a force gauge (ZTS-50N manufactured by Imada Co., Ltd.). A value obtained by dividing the measured maximum load by the adhesion area of 4.9 cm$^2$ was recorded as the ice adhesion strength. The test was performed three times, and the average value thereof was determined.

This measurement method was determined with reference to "Investigation to Prevent Icing (Part I), Hokkaido Industrial Research Institute Report No. 292 (1993)". The ice adhesion strength decreases substantially proportionally in response to an increase in the surface oil amount at least at -20°C.

The evaluation criteria are as follows.

A: The value of the ice adhesion strength was less than 0.1 N/cm$^2$.
B: The value of the ice adhesion strength was 0.1 N/cm$^2$ or more and less than 1.0 N/cm$^2$.
C: The value of the ice adhesion strength was 1.0 N/cm$^2$ or more.

(Water Resistance)

A sheet body (size: 150 mm × 150 mm) was put into a rainfall tester (manufactured by Nishiyama Seisakusho Co., Ltd.), and water in an amount corresponding to an annual precipitation amount was allowed to fall from an upper portion of the sheet body. The annual precipitation amount was 1600 mm with reference to data of Meteorological Agency. The test environment temperature was 5°C, the precipitation temperature was 5°C, and the rainfall rate was about 500 mm/hour on the assumption of rainy weather in winter.

The first oil component to the fourth oil component remaining in the sheet body after the rainfall test were extracted, and the reduction rates of the second oil component and the fourth oil component before and after the rainfall test were calculated from the change in the ratio of the first oil component to the fourth oil component. It was confirmed that the first oil component and the third oil component did not decrease in the rainfall test.

The extraction method of the first oil component to the fourth oil component in the sheet body and the calculation method of the reduction rate (%) of the second oil component and the fourth oil component are as follows.

1. The sheet body was cut into a size of 20 mm × 40 mm and placed into a screw tube bottle.
2. About 30 g of chloroform was placed into the screw tube bottle, and the bottle was capped.
3. The sheet was shaken at 100 rpm for 15 hours using a shaker (double action laboratory shaker SRR-2, manufactured by AS ONE Corporation) to extract the remaining oil in the sheet body.
4. The solid matter remaining in the screw tube bottle was removed.
5. Chloroform containing the extracted oil was dried by a dryer at 100°C for 2 hours to obtain a mixture of the first oil component to the fourth oil component.
6. About 3 mg of the obtained mixture and about 700 mg of deuterated chloroform were collected in a vial bottle to prepare a mixed solution.
7. The mixed solution was transferred to an NMR sample tube.
8. $^1$H-NMR was measured by NMR (Model number: ULTRASHIELD 300, manufactured by BRUKER Co., Ltd.), and assigned based on the molecular structure of each type of second component oil.
9. The reduction rate (%) of the second oil component and the fourth oil component due to the ultraviolet irradiation was calculated from the change in the H number of $Si-CH_3$ before and after the rainfall test.

[Examples 2 to 14 and Comparative Examples 1 to 22]

Sheet bodies were produced in the same manner as in Example 1 except that the content of the resin component, the types of the first oil component to the fourth oil component, and the content thereof in the first resin layer and the second resin layer were set as shown in Tables 1 to 5.

The obtained sheet bodies were evaluated in the same manner as in Example 1. The results are shown in Tables 6 to 10.

In Tables 6 to 10, the "resin ratio" means the value of "content ratio (mass%) of first resin in first resin layer/content ratio (mass%) of second resin in second resin layer", and the "oil ratio" means the value of "content ratio (mass%) of first oil component in first resin layer/content ratio (mass%) of second oil component in first resin layer".

In addition, "KF-96-1000", which is the first oil component or the third oil component, means dimethylsiloxane oil manufactured by Shin-Etsu Chemical Co., Ltd.," KF-6002", which is the second oil component or the fourth oil component, means carbinol-modified oil (containing a hydroxy group) manufactured by Shin-Etsu Chemical Co., Ltd., and "KF-6003", which is the second oil component or the fourth oil component, means carbinol-modified oil (containing a hydroxy group) manufactured by Shin-Etsu Chemical Co., Ltd.

[Table 1]

Table 1

| | First resin layer | | | | | | | Second resin layer | | | | | | |
| | Resin | First oil (compatible oil) | | | Second oil (incompatible oil) | | | Resin | Third oil (compatible oil) | | | Fourth oil (incompatible oil) | | |
| | Content (mass%) | Type | Viscosity (Pa•s) | Content (mass%) | Type | Viscosity (Pa•s) | Content (mass%) | Content (mass%) | Type | Viscosity (Pa•s) | Content (mass%) | Type | Viscosity (Pa•s) | Content (mass%) |
|---|---|---|---|---|---|---|---|---|---|---|---|---|---|---|
| Example 1 | 66 | KF-96-50 | 0.015 | 33 | No | - | 0 | 39.6 | KF-96-50 | 0.015 | 47.6 | BY 16-201 | 0.032 | 11.8 |
| Example 2 | 80 | KF-96-50 | 0.015 | 19 | No | - | 0 | 39.6 | KF-96-50 | 0.015 | 47.6 | BY 16-201 | 0.032 | 11.8 |
| Example 3 | 70 | KF-96-50 | 0.015 | 20 | By 16-201 | 0.032 | 9 | 39.6 | KF-96-50 | 0.015 | 47.6 | BY 16-201 | 0.032 | 11.8 |
| Example 4 | 80 | KF-96-50 | 0.015 | 10 | By 16-201 | 0.032 | 9 | 39.6 | KF-96-50 | 0.015 | 47.6 | BY 16-201 | 0.032 | 11.8 |
| Example 5 | 70 | KF-96-50 | 0.015 | 22.5 | By 16-201 | 0.032 | 6.5 | 39.6 | KF-96-50 | 0.015 | 47.6 | BY 16-201 | 0.032 | 11.8 |
| Example 6 | 80 | KF-96-50 | 0.015 | 12.5 | By 16-201 | 0.032 | 6.5 | 39.6 | KF-96-50 | 0.015 | 47.6 | BY 16-201 | 0.032 | 11.8 |
| Example 7 | 66 | KF-96-1000 | 0.65 | 28 | By 16-201 | 0.032 | 5 | 39.6 | KF-96-1000 | 0.65 | 50.6 | BY 16-201 | 0.032 | 8.8 |

EP 4 129 665 B1

[Table 2]

[Table 2]

Table 2

| | First resin layer | | | | | | | Second resin layer | | | | | | |
| | Resin | First oil (compatible oil) | | | Second oil (incompatible oil) | | | Resin | Third oil (compatible oil) | | | Fourth oil (incompatible oil) | | |
| | Content (mass%) | Type | Viscosity (Pa•s) | Content (mass%) | Type | Viscosity (Pa•s) | Content (mass%) | Content (mass%) | Type | Viscosity (Pa•s) | Content (mass%) | Type | Viscosity (Pa•s) | Content (mass%) |
|---|---|---|---|---|---|---|---|---|---|---|---|---|---|---|
| Example 8 | 66 | KF-96-1000 | 0.65 | 33 | No | - | 0 | 39.6 | KF-96-50 | 0.015 | 47.6 | BY 16-201 | 0.032 | 11.8 |
| Example 9 | 66 | KF-96-50 | 0.015 | 33 | No | - | 0 | 39.6 | KF-96-50 | 0.015 | 47.6 | BY 16-201 | 0.032 | 11.8 |
| Example 10 | 66 | KF-96-1000 | 0.65 | 33 | No | - | 0 | 39.6 | KF-96-1000 | 0.65 | 50.6 | BY 16-201 | 0.032 | 8.8 |
| Example 11 | 66 | KF-96-1000 | 0.65 | 33 | No | - | 0 | 39.6 | KF-96-50 | 0.015 | 29.7 | KF-6002 | 0.023 | 29.7 |
| Example 12 | 66 | KF-96-50 | 0.015 | 33 | No | - | 0 | 39.6 | KF-96-50 | 0.015 | 29.7 | KF-6002 | 0.023 | 29.7 |
| Example 13 | 66 | KF-96-1000 | 0.65 | 33 | No | - | 0 | 39.6 | KF-96-1000 | 0.65 | 32.7 | KF-6002 | 0.023 | 26.7 |
| Example 14 | 66 | KF-96-50 | 0.015 | 33 | No | - | 0 | 39.6 | KF-96-1000 | 0.65 | 32.7 | KF-6002 | 0.023 | 26.7 |

[Table 3]

[Table 3]

Table 3

| | First resin layer | | | | | | | Second resin layer | | | | | | |
| | Resin | First oil (compatible oil) | | | Second oil (incompatible oil) | | | Resin | Third oil (compatible oil) | | | Fourth oil (incompatible oil) | | |
| | Content (mass%) | Type | Viscosity (Pa•s) | Content (mass%) | Type | Viscosity (Pa•s) | Content (mass%) | Content (mass%) | Type | Viscosity (Pa•s) | Content (mass%) | Type | Viscosity (Pa•s) | Content (mass%) |
|---|---|---|---|---|---|---|---|---|---|---|---|---|---|---|
| Comparative Example 1 | 66 | KF-96-50 | 0.015 | 26.5 | By 16-201 | 0.032 | 6.5 | 39.6 | KF-96-50 | 0.015 | 47.6 | BY 16-201 | 0.032 | 11.8 |
| Comparative Example 2 | 66 | KF-96-50 | 0.015 | 23 | By 16-201 | 0.032 | 10 | 39.6 | KF-96-50 | 0.015 | 47.6 | BY 16-201 | 0.032 | 11.8 |
| Comparative Example 3 | 90 | KF-96-50 | 0.015 | 1 | By 16-201 | 0.032 | 8 | 39.6 | KF-96-50 | 0.015 | 47.6 | BY 16-201 | 0.032 | 11.8 |
| Comparative Example 4 | 50 | KF-96-50 | 0.015 | 42.5 | By 16-201 | 0.032 | 6.5 | 39.6 | KF-96-50 | 0.015 | 47.6 | BY 16-201 | 0.032 | 11.8 |
| Comparative Example 5 | 50 | KF-96-50 | 0.015 | 39 | By 16-201 | 0.032 | 10 | 39.6 | KF-96-50 | 0.015 | 47.6 | BY 16-201 | 0.032 | 11.8 |
| Comparative Example 6 | 99 | No | - | 0 | No | - | 0 | 39.6 | KF-96-50 | 0.015 | 47.6 | BY 16-201 | 0.032 | 11.8 |
| Comparative Example 7 | 66 | KF-96-50 | 0.015 | 33 | No | - | 0 | 39.6 | KF-96-1000 | 0.65 | 5 | KF-6003 | 0.066 | 54.4 |

[Table 4]

[Table 4]

Table 4

| | First resin layer | | | | | | | Second resin layer | | | | | | |
| | Resin | First oil (compatible oil) | | | Second oil (incompatible oil) | | | Resin | Third oil (compatible oil) | | | Fourth oil (incompatible oil) | | |
| | Content (mass%) | Type | Viscosity (Pa•s) | Content (mass%) | Type | Viscosity (Pa•s) | Content (mass%) | Content (mass%) | Type | Viscosity (Pa•s) | Content (mass%) | Type | Viscosity (Pa•s) | Content (mass%) |
|---|---|---|---|---|---|---|---|---|---|---|---|---|---|---|
| Comparative Example 8 | 66 | KF-96-1000 | 0.65 | 33 | No | - | 0 | 39.6 | KF-96-1000 | 0.65 | 5 | KF-6003 | 0.066 | 54.4 |
| Comparative Example 9 | 66 | KF-96-1000 | 0.65 | 33 | No | - | 0 | 39.6 | KF-96-50 | 0.015 | 10 | KF-6003 | 0.066 | 49.4 |
| Comparative Example 10 | 66 | KF-96-50 | 0.015 | 33 | No | - | 0 | 39.6 | KF-96-50 | 0.015 | 10 | KF-6003 | 0.066 | 49.4 |
| Comparative Example 11 | 66 | KF-96-50 | 0.015 | 11 | KF-6003 | 0.066 | 22 | 39.6 | KF-96-1000 | 0.65 | 5 | KF-6003 | 0.066 | 54.4 |
| Comparative Example 12 | 66 | KF-96-1000 | 0.65 | 11 | KF-6003 | 0.066 | 22 | 39.6 | KF-96-1000 | 0.65 | 5 | KF-6003 | 0.066 | 54.4 |
| Comparative Example 13 | 66 | KF-96-50 | 0.015 | 11 | KF-6003 | 0.066 | 22 | 39.6 | KF-96-50 | 0.015 | 10 | KF-6003 | 0.066 | 49.4 |
| Comparative Example 14 | 66 | KF-96-1000 | 0.65 | 11 | KF-6003 | 0.066 | 22 | 39.6 | KF-96-50 | 0.015 | 10 | KF-6003 | 0.066 | 49.4 |

[Table 5]

[Table 5]

Table 5

| | First resin layer | | | | | | | Second resin layer | | | | | | |
| | Resin | First oil (compatible oil) | | | Second oil (incompatible oil) | | | Resin | Third oil (compatible oil) | | | Fourth oil (incompatible oil) | | |
| | Content (mass%) | Type | Viscosity (Pa·s) | Content (mass%) | Type | Viscosity (Pa·s) | Content (mass%) | Content (mass%) | Type | Viscosity (Pa·s) | Content (mass%) | Type | Viscosity (Pa·s) | Content (mass%) |
| Comparative Example 15 | 66 | KF-96-50 | 0.015 | 26.5 | By 16-201 | 0.032 | 6.5 | 39.6 | KF-96-1000 | 0.65 | 50.6 | BY 16-201 | 0.032 | 8.8 |
| Comparative Example 16 | 66 | KF-96-50 | 0.015 | 16.5 | KF-6002 | 0.023 | 16.5 | 39.6 | KF-96-50 | 0.015 | 29.7 | KF-6002 | 0.023 | 29.7 |
| Comparative Example 17 | 66 | KF-96-1000 | 0.65 | 16.5 | KF-6002 | 0.023 | 16.5 | 39.6 | KF-96-50 | 0.015 | 29.7 | KF-6002 | 0.023 | 29.7 |
| Comparative Example 18 | 66 | KF-96-1000 | 0.65 | 16.5 | KF-6002 | 0.023 | 16.5 | 39.6 | KF-96-1000 | 0.65 | 32.7 | KF-6002 | 0.023 | 26.7 |
| Comparative Example 19 | 66 | KF-96-50 | 0.015 | 11 | KF-6003 | 0.066 | 22 | 39.6 | KF-96-50 | 0.015 | 47.6 | BY 16-201 | 0.032 | 11.8 |
| Comparative Example 20 | 66 | KF-96-1000 | 0.65 | 11 | KF-6003 | 0.066 | 22 | 39.6 | KF-96-50 | 0.015 | 47.6 | BY 16-201 | 0.032 | 11.8 |
| Comparative Example 21 | 66 | KF-96-50 | 0.015 | 11 | KF-6003 | 0.066 | 22 | 39.6 | KF-96-1000 | 0.65 | 50.6 | BY 16-201 | 0.032 | 8.8 |
| Comparative Example 22 | 66 | KF-96-1000 | 0.65 | 11 | KF-6003 | 0.066 | 22 | 39.6 | KF-96-1000 | 0.65 | 50.6 | BY 16-201 | 0.032 | 8.8 |

[Table 6]

[Table 6]

Table 6

| | Resin ratio | Oil ratio | Phase separability and compatibility, etc. | | | Surface oil amount | | | Wear Resistance | Ice adhesion strength | Water resistance |
|---|---|---|---|---|---|---|---|---|---|---|---|
| | | | Third oil/Fourth oil | Third oil/Resin | Fourth oil/Resin | 20°C | 0°C | -20°C | | | |
| Example 1 | 1.67 | ∞ | A | A | B | B | A | A | A | A | 6.1 |
| Example 2 | 2.02 | ∞ | A | A | B | B | B | A | A | A | 6.7 |
| Example 3 | 1.77 | 2.22 | A | A | B | B | A | A | A | A | 8.9 |
| Example 4 | 2.02 | 1.11 | A | A | B | B | A | A | A | A | 7.3 |
| Example 5 | 1.77 | 3.46 | A | A | B | B | A | A | A | A | 5.4 |
| Example 6 | 2.02 | 1.92 | A | A | B | B | A | A | A | A | 2.8 |
| Example 7 | 1.67 | 5.60 | A | A | B | B | A | A | A | A | 0 |

[Table 7]

[Table 7]

Table 7

| | Resin ratio | Oil ratio | Phase separability and compatibility, etc. | | | Surface oil amount | | | Wear Resistance | Ice adhesion strength | Water resistance |
|---|---|---|---|---|---|---|---|---|---|---|---|
| | | | Third oil/Fourth oil | Third oil/Resin | Fourth oil/Resin | 20°C | 0°C | -20°C | | | |
| Example 8 | 1.67 | ∞ | A | A | B | B | A | A | A | A | 7.1 |
| Example 9 | 1.67 | ∞ | A | A | B | B | A | A | A | A | 0 |
| Example 10 | 1.67 | ∞ | A | A | B | B | A | A | A | A | 2.1 |
| Example 11 | 1.67 | ∞ | A | A | B | B | A | A | A | A | 0 |
| Example 12 | 1.67 | ∞ | A | A | B | B | A | A | A | A | 0 |
| Example 13 | 1.67 | ∞ | A | A | B | B | A | A | A | A | 0 |
| Example 14 | 1.67 | ∞ | A | A | B | B | A | A | A | A | 0 |

[Table 8]

[Table 8]

Table 8

| | Resin ratio | Oil ratio | Phase separability and compatibility, etc. | | | Surface oil amount | | | Wear Resistance | Ice adhesion strength | Water resistance |
|---|---|---|---|---|---|---|---|---|---|---|---|
| | | | Third oil/Fourth oil | Third oil/Resin | Fourth oil/Resin | 20°C | 0°C | -20°C | | | |
| Comparative Example 1 | 1.67 | 4.08 | A | A | B | B | A | A | A | A | 9 |
| Comparative Example 2 | 1.67 | 2.30 | A | A | B | B | A | A | A | A | 11.8 |
| Comparative Example 3 | 2.27 | 0.13 | A | A | B | B | A | A | A | A | 39 |
| Comparative Example 4 | 1.26 | 6.54 | A | A | B | B | A | A | A | A | 13 |
| Comparative Example 5 | 1.26 | 3.90 | A | A | B | B | A | A | A | A | 11.2 |
| Comparative Example 6 | 2.50 | ∞ | A | A | B | B | B | B | A | C | 5 |
| Comparative Example 7 | 1.67 | ∞ | A | A | B | B | A | A | A | A | 23.2 |

[Table 9]

[Table 9]

Table 9

| | Resin ratio | Oil ratio | Phase separability and compatibility, etc. | | | Surface oil amount | | | Wear Resistance | Ice adhesion strength | Water resistance |
|---|---|---|---|---|---|---|---|---|---|---|---|
| | | | Third oil/Fourth oil | Third oil/Resin | Fourth oil/Resin | 20°C | 0°C | -20°C | | | |
| Comparative Example 8 | 1.67 | ∞ | A | A | B | B | A | A | A | A | 52 |
| Comparative Example 9 | 1.67 | ∞ | A | A | B | B | A | A | A | A | 16 |
| Comparative Example 10 | 1.67 | ∞ | A | A | B | B | A | A | A | A | 30.5 |
| Comparative Example 11 | 1.67 | 0.50 | A | A | B | B | A | A | A | A | 16.8 |
| Comparative Example 12 | 1.67 | 0.50 | A | A | B | B | A | A | A | A | 10.8 |
| Comparative Example 13 | 1.67 | 0.50 | A | A | B | B | A | A | A | A | 17.1 |
| Comparative Example 14 | 1.67 | 0.50 | A | A | B | B | A | A | A | A | 13.4 |

[Table 10]

[Table 10]

Table 10

| | Resin ratio | Oil ratio | Phase separability and compatibility, etc. | | | Surface oil amount | | | Wear Resistance | Ice adhesion strength | Water resistance |
|---|---|---|---|---|---|---|---|---|---|---|---|
| | | | Third oil/Fourth oil | Third oil/Resin | Fourth oil/Resin | 20°C | 0°C | -20°C | | | |
| Comparative Example 15 | 1.67 | 4.08 | A | A | B | B | A | A | A | A | 17.7 |
| Comparative Example 16 | 1.67 | 1.00 | A | A | B | B | A | A | A | A | 12.1 |
| Comparative Example 17 | 1.67 | 1.00 | A | A | B | B | A | A | A | A | 14.7 |
| Comparative Example 18 | 1.67 | 1.00 | A | A | B | B | A | A | A | A | 13 |
| Comparative Example 19 | 1.67 | 0.50 | A | A | B | B | A | A | A | A | 17.4 |
| Comparative Example 20 | 1.67 | 0.50 | A | A | B | B | A | A | A | A | 11.5 |
| Comparative Example 21 | 1.67 | 0.50 | A | A | B | B | A | A | A | A | 11 |
| Comparative Example 22 | 1.67 | 0.50 | A | A | B | B | A | A | A | A | 22.4 |

From the results of Tables 6 to 10, it was found that the sheet bodies of the present invention had an excellent ice and/or snow adhesion prevention function with less outflow of an oil component even when an oil component having a hydrophilic group was used.

REFERENCE SIGNS LIST

1 Sheet body
11 Second resin layer
12 First resin layer
13 Substrate
14 Pressure-sensitive adhesive layer
15 Separator
16 Oil-impermeable resin layer
20 Gakushin type abrasion tester
21 Test table
22 Support plate
22a Screw
23 Weight
24 Cantilevered load arm
25 Friction element
31 Pressure-sensitive adhesive
32 Test Piece
33 Water-resistant abrasive

## Claims

1. A sheet body comprising a first resin layer containing a first resin and a second resin layer containing a second resin, wherein

   the first resin layer is laminated on one surface of the second resin layer,
   the first resin layer contains at least one oil component selected from the group consisting of a first oil component and a second oil component,
   the second oil component contains a low temperature phase-separable oil component that has a hydrophilic group and is capable of exuding out from the first resin layer when a temperature drops to a predetermined value or less, and
   the following formula (1a) and the following formula (2a) are satisfied, or the following formula (1b) and the following formula (2b) are satisfied:

   Content ratio (mass%) of first resin in first resin layer/Content ratio (mass%) of second resin in second resin layer $\geq 1.75$     (1a)

   Content ratio (mass%) of first oil component in first resin layer/Content ratio (mass%) of second oil component in first resin layer $\geq 1$     (2a)

   Content ratio (mass%) of first resin in first resin layer/Content ratio (mass%) of second resin in second resin layer $\geq 1.65$     (1b)

   Content ratio (mass%) of first oil component in first resin layer/Content ratio (mass%) of second oil component in first resin layer $\geq 4.2$     (2b).

2. The sheet body according to claim 1, wherein the second resin layer contains a fourth oil component, and the fourth oil component contains a low temperature phase-separable oil component that has a hydrophilic group, is allowed to pass through the second resin layer and is capable of exuding out from the first resin layer when the temperature drops to the predetermined value or less.

3.  The sheet body according to claim 2, wherein a content ratio of the fourth oil component in the second resin layer is 48 mass% or less.

4.  The sheet body according to claim 2, wherein at least one of the hydrophilic group of the second oil component or the hydrophilic group of the fourth oil component is a hydroxy group, a carboxy group, an amino group, a sulfo group, an ether group, an ester group, or a carbinol group.

5.  The sheet body according to any one of claims 1 to 4, wherein a content of the first resin is 40 mass% to 99 mass% based on total mass of the first resin layer.

6.  The sheet body according to any one of claims 1 to 5, wherein a content of the first oil component is 1 mass% to 60 mass% based on total mass of the first resin layer.

7.  The sheet body according to any one of claims 1 to 6, wherein a content of the second oil component is 0.01 mass% to 20 mass% based on total mass of the first resin layer.

8.  The sheet body according to any one of claims 1 to 7, wherein the first resin layer has a thickness of 50 $\mu$m or more.


**Patentansprüche**

1.  Folienkörper, umfassend eine erste Harzschicht, die ein erstes Harz enthält, und eine zweite Harzschicht, die ein zweites Harz enthält, wobei

    die erste Harzschicht auf eine Oberfläche der zweiten Harzschicht laminiert ist,
    die erste Harzschicht wenigstens eine Ölkomponente, ausgewählt aus der Gruppe, bestehend aus einer ersten Ölkomponente und einer zweiten Ölkomponente, enthält,
    die zweite Ölkomponente eine Niedertemperaturphasentrennbare Ölkomponente enthält, die eine hydrophile Gruppe aufweist und zum Austreten aus der ersten Harzschicht in der Lage ist, wenn eine Temperatur auf einen vorbestimmten Wert oder darunter fällt, und
    die folgende Formel (1a) und die folgende Formel (2a) erfüllt sind oder die folgende Formel (1b) und die folgende Formel (2b) erfüllt sind:

    Gehaltsverhältnis (Massen-%) des ersten Harzes in der ersten Harzschicht/Gehaltsverhältnis (Massen-%) des zweiten Harzes in der zweiten Harzschicht $\geq 1{,}75$ (1a)

    Gehaltsverhältnis (Massen-%) der ersten Ölkomponente in der ersten Harzschicht/ Gehaltsverhältnis (Massen-%) der zweiten Ölkomponente in der ersten Harzschicht $\geq 1$ --> (2a)

    Gehaltsverhältnis (Massen-%) des ersten Harzes in der ersten Harzschicht/Gehaltsverhältnis (Massen-%) des zweiten Harzes in der zweiten Harzschicht $\geq 1{,}65$ (1b)

    Gehaltsverhältnis (Massen-%) der ersten Ölkomponente in der ersten Harzschicht/ Gehaltsverhältnis (Massen-%) der zweiten Ölkomponente in der ersten Harzschicht $\geq 4{,}2$ (2b).

2.  Folienkörper gemäß Anspruch 1, wobei die zweite Harzschicht eine vierte Ölkomponente enthält und die vierte Ölkomponente eine Niedertemperaturphasentrennbare Ölkomponente enthält, die eine hydrophile Gruppe aufweist, durch die zweite Harzschicht passieren darf und zum Austreten aus der ersten Harzschicht in der Lage ist, wenn die Temperatur auf den vorbestimmten Wert oder darunter fällt.

3.  Folienkörper gemäß Anspruch 2, wobei ein Gehaltsverhältnis der vierten Ölkomponente in der zweiten Harzschicht 48 Massen-% oder weniger beträgt.

**4.** Folienkörper gemäß Anspruch 2, wobei wenigstens eine von der hydrophilen Gruppe der zweiten Ölkomponente oder der hydrophilen Gruppe der vierten Ölkomponente eine Hydroxygruppe, eine Carboxygruppe, eine Aminogruppe, eine Sulfogruppe, eine Ethergruppe, eine Estergruppe oder eine Carbinolgruppe ist.

**5.** Folienkörper gemäß irgendeinem der Ansprüche 1 bis 4, wobei ein Gehalt des ersten Harzes 40 Massen-% bis 99 Massen-%, basierend auf der Gesamtmasse der ersten Harzschicht, beträgt.

**6.** Folienkörper gemäß irgendeinem der Ansprüche 1 bis 5, wobei ein Gehalt der ersten Ölkomponente 1 Massen-% bis 60 Massen-%, basierend auf der Gesamtmasse der ersten Harzschicht, beträgt.

**7.** Folienkörper gemäß irgendeinem der Ansprüche 1 bis 6, wobei ein Gehalt der zweiten Ölkomponente 0,01 Massen-% bis 20 Massen-%, basierend auf der Gesamtmasse der ersten Harzschicht, beträgt.

**8.** Folienkörper gemäß irgendeinem der Ansprüche 1 bis 7, wobei die erste Harzschicht eine Dicke von 50 $\mu$m oder mehr hat.

## Revendications

**1.** Corps de feuille comprenant une première couche de résine contenant une première résine et une deuxième couche de résine contenant une deuxième résine, dans lequel

la première couche de résine est stratifiée sur une surface de la deuxième couche de résine,
la première couche de résine contient au moins un composant huileux choisi dans le groupe consistant en un premier composant huileux et un deuxième composant huileux,
le deuxième composant huileux contient un composant huileux séparable en phase à basse température qui a un groupe hydrophile et est capable d'exsuder hors de la première couche de résine lorsqu'une température baisse jusqu'à une valeur prédéterminée ou moins, et
la formule (1a) suivante et la formule (2a) suivante sont satisfaites, ou la formule (1b) suivante et la formule (2b) suivante sont satisfaites:

rapport de teneur (% en masse) de la première résine dans la première couche de résine/rapport de teneur (% en masse) de la deuxième résine dans la deuxième couche de résine ≥ 1,75    (1a)

rapport de teneur (% en masse) du premier composant huileux dans la première couche de résine/ rapport de teneur (% en masse) du deuxième composant huileux dans la première couche de résine ≥ 1    (2a)

rapport de teneur (% en masse) de la première résine dans la première couche de résine/rapport de teneur (% en masse) de la deuxième résine dans la deuxième couche de résine ≥ 1,65    (1b)

rapport de teneur (% en masse) du premier composant huileux dans la première couche de résine/ rapport de teneur (% en masse) du deuxième composant huileux dans la première couche de résine ≥ 4,2    (2b).

**2.** Corps de feuille selon la revendication 1, dans lequel la deuxième couche de résine contient un quatrième composant huileux, et le quatrième composant huileux contient un composant huileux séparable en phase à basse température qui a un groupe hydrophile, est autorisé à traverser la deuxième couche de résine et est capable d'exsuder hors de la première couche de résine lorsque la température baisse jusqu'la valeur prédéterminée ou moins.

**3.** Corps de feuille selon la revendication 2, dans lequel un rapport de teneur du quatrième composant huileux dans la deuxième couche de résine est de 48 % en masse ou moins.

**4.** Corps de feuille selon la revendication 2, dans lequel au moins l'un du groupe hydrophile du deuxième composant huileux ou du groupe hydrophile du quatrième composant huileux est un groupe hydroxy, un groupe carboxy, un groupe amino, un groupe sulfo, un groupe éther, un groupe ester ou un groupe carbinol.

5. Corps de feuille selon l'une quelconque des revendications 1 à 4, dans lequel une teneur de la première résine est de 40 % en masse à 99 % en masse sur la base de la masse totale de la première couche de résine.

6. Corps de feuille selon l'une quelconque des revendications 1 à 5, dans lequel une teneur du premier composant huileux est de 1 % en masse à 60 % en masse sur la base de la masse totale de la première couche de résine.

7. Corps de feuille selon l'une quelconque des revendications 1 à 6, dans lequel une teneur du deuxième composant huileux est de 0,01 % en masse à 20 % en masse sur la base de la masse totale de la première couche de résine.

8. Corps de feuille selon l'une quelconque des revendications 1 à 7, dans lequel la première couche de résine a une épaisseur de 50 $\mu$m ou plus.

## FIG. 1

## FIG. 2

## FIG. 3

## FIG. 4

## FIG. 5

Reciprocating
Motion

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7148879 A

**Non-patent literature cited in the description**

- Investigation to Prevent Icing. *Hokkaido Industrial Research Institute Report No. 292*, 1993